**Europäisches Patentamt**

**European Patent Office**

**Office européen des brevets**

(19)

(11) Veröffentlichungsnummer: **0 268 861**
**B1**

(12) **EUROPÄISCHE PATENTSCHRIFT**

(45) Veröffentlichungstag der Patentschrift:
22.03.89

(51) Int. Cl.⁴: **B60N 3/14**, F23Q 7/00

(21) Anmeldenummer: 87115807.7

(22) Anmeldetag: 28.10.87

(54) Zigarettenanzünder mit verbesserter Halterung für Kraftfahrzeuge.

(30) Priorität: 29.10.86 FR 8615052

(43) Veröffentlichungstag der Anmeldung:
01.06.88 Patentblatt 88/22

(45) Bekanntmachung des Hinweises auf die Patenterteilung:
22.03.89 Patentblatt 89/12

(84) Benannte Vertragsstaaten:
DE ES FR GB IT

(56) Entgegenhaltungen:
DE-A- 3 008 772
FR-A- 2 163 778
FR-A- 2 446 992
FR-A- 2 456 637
US-A- 4 500 774

(73) Patentinhaber: NEIMAN, 39 Avenue Marceau,
F-92400 Courbevoie(FR)

(72) Erfinder: Mallet, Christian Gabriel, 3, rue du Rousset,
F-91490 Milly La Foret(FR)

(74) Vertreter: Patentanwaltsbüro Cohausz & Florack,
Postfach 14 01 47, D-4000 Düsseldorf 1(DE)

ACTORUM AG

## Beschreibung

Die Erfindung betrifft einen Zigarettenanzünder für Kraftfahrzeuge, der eine im Fahrzeug befestigte Fassung, eine in der Fassung eingerastete Kontaktmanschette und eine in die Manschette einführbare Steckvorrichtung umfasst.

Im allgemeinen wird die Fassung bei der Montage der den Zigarettenanzünder tragenden Nebeneinrichtung in das Fahrzeug eingebaut, in der Regel im Armaturenbrett oder an anderer dafür vorgesehener Stelle. Die Manschette und die Steckvorrichtung werden getrennt installiert.

Der Einbau der Manschette in die Fassung muss genau winklig erfolgen, um sicherzustellen, dass die in der Manschette befindlichen Kontakte korrekt geschlossen werden können. Die Montage erfolgt im allgemeinen durch Einrasten, wobei die winklige Anordnung durch ein betriebssicheres Steckersystem sichergestellt wird.

In einem bekannten Steckersystem wird ein von der Fassung separater Boden mit einer Sollbruchstelle verwendet, der bei der Installierung der Manschette weggebrochen wird. Der Nachteil bei diesem System ist, dass ein abgetrenntes Teil freikommt, das in der Regel in den Raum hinter der Fassung fällt und dadurch andere Teile, wie etwa Anschlussteile, die sich in diesem Raum befinden, behindern kann. Für den Fahrzeugbauer ist ein nicht zu beseitigendes Abfallstück in jeder Hinsicht unbefriedigend.

Ziel der vorliegenden Erfindung ist es, ein solches Freiwerden eines Abfallstückes zu vermeiden, und zwar dank eines neuen, leicht herstellbaren und leicht zu handhabenden sowie sicher arbeitenden Steckersystems, das trotz der in einem Kraftfahrzeug vorkommenden Vibrationen eine stabile Halterung gewährleistet.

Dazu ist der erfindungsgemässe Zigarettenanzünder dadurch gekennzeichnet, dass die Fassung zwei längliche, radial gegenüberliegende Ausschnitte von unterschiedlicher Grösse beinhaltet, in denen je eine längliche, elastische Zunge vorgesehen ist, die mit einem nach innen gerichteten Nippel ausgerüstet ist, wobei die genannten Ausschnitte so in die Dicke der äusseren Wandung der Fassung eingefügt sind, dass sich die Zungen in der Verlängerung der genannten äusseren Wandung befinden, wobei ihr Nippel in das Innere des Raumes vorspringt, der durch die Innenfläche dieser Wandung begrenzt wird; die Manschette beinhaltet auf ihrer Vorderfläche zwei Nocken, die nach aussen und vorne vorspringen und voneinander beabstandet werden, indem jeder in eine der zwischen einer der Zungen und den Rändern des entsprechenden Ausschnittes liegenden Spalten geschoben wird, wobei die Manschette ausserdem eine den genannten Nocken radial gegenüberliegende, vordere Auskerbung beinhaltet, die in der Grösse der des anderen Ausschnitts entspricht, so dass, nachdem unter elastischer Verformung der Zungen die Manschette in die Fassung eingeführt wurde, die Nocken der Manschette hinter der hinteren Kante der Fassung einrasten.

Die Erfindung wird durch die Lektüre der folgenden Beschreibung, die sich auf die beigefügte Zeichnung bezieht, leicht verständlich; in dieser ist

– Abbildung 1 eine seitliche Draufsicht des Zigarettenanzünders vor der Montage;
– Abbildung 2 eine Ansicht entlang Linie A von Abbildung 1;
– Abbildung 3 eine Ansicht entlang Linie B von Abbildung 1 und
- Abbildung 4 eine Draufsicht des Zigarettenanzünders aus Abbildungen 1 bis 3 nach der Montage.

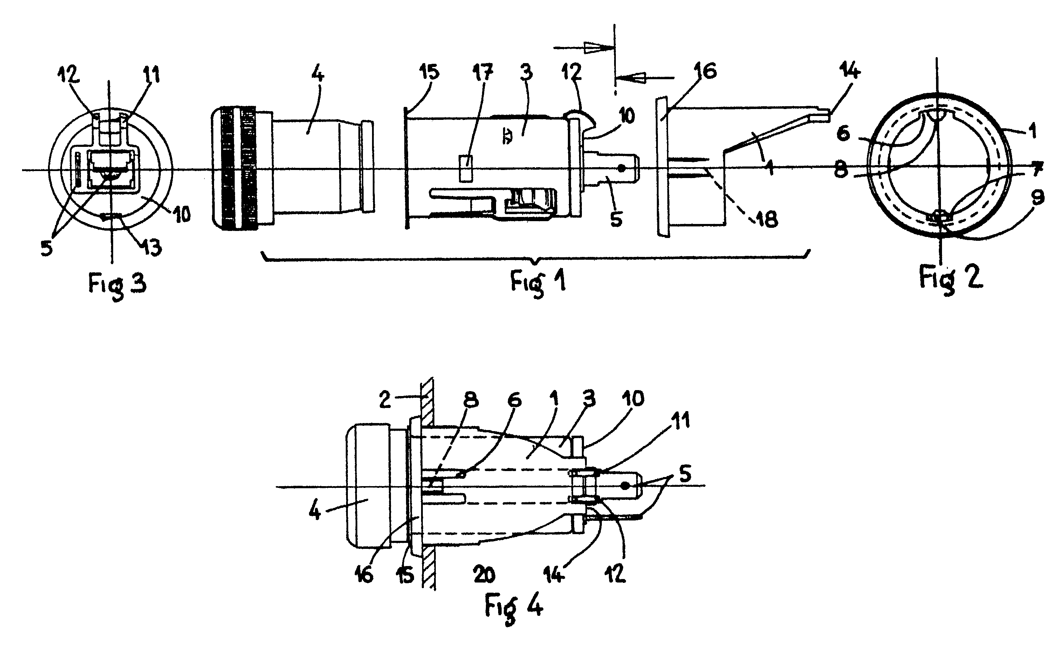

Der Zigarettenanzünder umfasst eine durch ein zweckmässiges Mittel in eine Wandung 2 (Abbildung 4) eingebaute Fassung 1. Eine Manschette 3 rastet dann in die Fassung 1 ein und nimmt eine Zigarettenanzündersteckvorrichtung 4 auf. Die Manschette 3 trägt Speiseanschlüsse 5, die zu der Fassung 1 genau winklig liegen müssen.

Die Fassung 1 beinhaltet zwei radial gegenüberliegende Ausschnitte 6 und 7, in denen sich längliche, elastische Zungen 20 (Abbildung 4) befinden, die jeweils mit einem Nippel 8 und 9 ausgerüstet sind und in das Innere der Fassung 1 vorspringen, wobei der Ausschnitt 6 grösser als der Ausschnitt 7 ist.

Die Manschette 3 ist an ihrem vorderen Ende 10 mit zwei Nocken 11 und 12 ausgerüstet, die bezüglich der Manschette nach vorne und aussen vorspringen. Grösse und Abstand der Nocken 11, 12 sind so bemessen, dass diese Nocken in den Ausschnitt 6 gleiten können und dabei den Nippel 8 der entsprechenden Zunge 20 elastisch zurückdrücken.

Das vordere Ende 10 der Manschette 3 beinhaltet ausserdem eine den Nocken 11, 12 radial gegenüberliegende vordere Auskerbung 13, die so gross ist, dass sie beim Einführen der Manschette 3 den Nippel 9 des Ausschnitts 7 in die Fassung 1 schiebt. Nach diesem Einführen rasten die Nocken 11, 12 hinter der hinteren Kante 14 der Fassung 1 ein, wodurch sich der vordere Rand 15 der Manschette 3 fest an den Rand 16 der Fassung 1 anlegt, die dann ihrerseits an der Wandung 2 (Abbildung 4) anliegt.

Zur Optimierung der Halterung kann die Aussenfläche der Manschette 3 Auskerbungen 17 beinhalten, die zum Zwecke des Einführens in die elastischen inneren Vorsprünge 18 der Fassung 1 eingreifen.

## Patentansprüche

1. Zigarettenanzünder für Kraftfahrzeuge, der eine im Fahrzeug befestigte Fassung (1), eine in der Fassung (1) eingerastete Kontaktmanschette (3) und eine in die Manschette (3) einführbare Steckvorrichtung (4) umfasst, dadurch gekennzeichnet, dass die Fassung (1) zwei längliche, radial gegenüberliegende Ausschnitte (6,7) von unterschiedlicher Grösse beinhaltet, in denen je eine längliche elastische Zunge (20) vorgesehen ist, die mit einem nach innen gerichteten Nippel (8,9) ausgerüstet ist, wobei die genannten Ausschnitte (6,7) so in die Dicke der äusseren Wandung der Fassung (1) eingefügt sind, dass sich die Zungen (20) in der Verlängerung der genannten äusseren Wandung befinden, wobei ihr Nippel (8,9) in das Innere des Raumes vorspringt, der durch die Innenfläche dieser Wandung begrenzt wird; die Manschette (3) beinhaltet auf ihrer Vorderfläche zwei Nocken (11,12), die nach aussen und vorne vorspringen und voneinander beabstandet werden, indem jeder in eine der zwischen einer der Zungen (8) und den Rändern des entsprechenden Ausschnittes (6) liegenden Spalten geschoben wird, wobei die Manschette (3) ausserdem eine den genannten Nocken (11,12) radial gegenüberliegende, vordere Auskerbung (13) beinhaltet, die in der Grösse der des anderen Ausschnittes (7) entspricht, so dass, nachdem unter elastischer Verformung der Zungen (8) die Manschette (3) in die Fassung (1) eingeführt wurde, die Nocken (11,12) der Manschette (3) hinter der hinteren Kante (14) der Fassung (1) einrasten.

2. Zigarettenanzünder nach Anspruch 1, dadurch gekennzeichnet, dass die Aussenfläche der Manschette (3) Auskerbungen (17) beinhaltet, die zum Zwecke des Einführens in die elastischen inneren Vorsprünge (18) der Fassung (1) eingreifen.

## Claims

1. A cigarette lighter for motor vehicles and comprising, fixed in the vehicle, a mounting (1), a contact sleeve (3) which latches into the mounting (1) and a plug-in device (4) which can be introduced into the sleeve (3), characterised in that the mounting (1) comprises two elongated radially oppositely disposed cut-outs (6, 7) of different sizes, in each of which there is an elongated resilient tongue (20) which is equipped with an inwardly directed nipple (8, 9), the said cut-outs (6, 7) being so introduced into the thickness of the outer wall of the mounting (1) that the tongues (20) are disposed in the extension of the said outer walls, their nipples (8, 9) projecting into the interior of the space bounded by the inside surface of these walls; the sleeve (3) comprises on its front face two projections (11, 12) which protrude outwardly and forwardly and which are spaced apart from each other in that each is pushed into one of the gaps disposed between the tongues (8) and the edges of the corresponding cut-out (6), the sleeve (3) furthermore comprising, radially opposite the said projection (11, 12), a front notch (13) which corresponds in size to the other cut-out (7) so that once the sleeve (3) has been introduced into the mounting (1), accompanied by an elastic deformation of the tongues (8), the projections (11, 12) on the sleeve (3) can engage behind the rear edge (14) of the mounting (1).

2. A cigarette lighter according to Claim 1, characterised in that the outer surface of the sleeve (3) comprises notches (17) which for the purposes of insertion, engage into the resilient inner projections (18) on the mounting (1).

## Revendications

1. Allume-cigare pour véhicule automobile comprenant une douille (1) fixée dans le véhicule, un manchon (3) porte-contact encliqueté dans la douille (1), et un dispositif enfichable (4) pouvant être enfoncé dans le manchon (3), caractérisé par le fait que la douille (1) comporte deux fenêtres (6, 7) longitudinales de largeurs différentes et diamétralement opposées dans chacune desquelles est disposée une languette (20) longitudinale élastique qui est munie d'un téton (8, 9) tourné vers l'intérieur, lesdites fenêtres (6, 7) étant ménagées dans l'épaisseur de la paroi périphérique de la douille (1) de manière que les languettes (20) soient dans le prolongement de ladite paroi périphérique, leur téton (8, 9) faisant saillie à l'intérieur du volume délimité par la face interne de cette paroi, le manchon (3) comportant sur sa face antérieure deux ergots (11, 12) qui font saillie vers l'extérieur et en avant et sont écartés, sur chacun desquels coulisse l'une des fentes ménagées entre l'une des languettes (8) et les bords de la fenêtre (6) correspondante, le manchon (3) comportant en outre une encoche frontale (13) diamétralement opposée auxdits ergots (11, 12), dont la largeur correspond à celle de l'autre fenêtre (7), de telle manière que, lors de l'enfoncement du manchon (3) dans la douille (1) avec déformation élastique des languettes (8), les tétons (11, 12) du manchon (3) s'encliquètent derrière l'arête postérieure (14) de la douille (1).

2. Allume-cigare selon la revendication 1, caractérisé par le fait que la face externe du manchon (3) comporte des encoches (17), qui s'encliquètent sur des saillies internes élastiques (18) de la douille (1) dans le but de l'enfoncement.

Fig 1

Fig 2

Fig 3

Fig 4